# EUROPEAN PATENT SPECIFICATION

(11) **EP 4 224 172 B1**
(45) Date of publication and mention of the grant of the patent: **29.01.2025**
(21) Application number: 23155445.2
(22) Date of filing: 07.02.2023
(51) Int. Cl.: B64D 45/00, G01P 5/16, G01P 21/02, G01P 5/165

(54) **DYNAMIC MULTI-STAGE AIR DATA PROBE PROGNOSTICS HEALTH MONITORING MANAGEMENT**
DYNAMISCHES MEHRSTUFIGES LUFTDATENSONDENPROGNOSTISCHES GESUNDHEITSÜBERWACHUNGSMANAGEMENT
GESTION DE PRONOSTIC DE SURVEILLANCE DE SANTÉ DE SONDE DE DONNÉES D'AIR DYNAMIQUE À PLUSIEURS ÉTAGES

(30) Priority: 07.02.2022 IN 202241006326
(43) Date of publication of application: 09.08.2023
(73) Proprietor: ROSEMOUNT AEROSPACE INC., Burnsville, MN 55306-4898 (US)
(72) Inventor: BALASUBRAMANIAN, Rameshkumar, Apple Valley, MN (US); ROESKE, Cal, Eagan, MN (US)
(74) Representative: Dehns

(56) References cited:
- EP-A1- 3 739 411
- EP-A1- 3 816 649
- US-A1- 2019 041 830
- NUNO ALBERTO FONTE SILVA E LIMA: "Development of an Aircraft Health Monitoring Program for Predictive Maintenance", 31 December 2017 (2017-12-31), pages 1 - 96, XP055604680, Retrieved from the Internet <URL:https://fenix.tecnico.ulisboa.pt/downloadFile/1689244997258150/Thesis_73733.pdf> [retrieved on 20190711]

## Description

### BACKGROUND

The disclosed subject matter relates generally to prognostics health monitoring, and more particularly, to a modular prognostics health monitoring system for air data probes.

Air data probes are safety-critical sensors installed on all modern aircraft to measure parameters like total pressure, static pressure, and in some cases, pressures for angle of attack and side slip. These probes are external to the aircraft and are exposed to harsh weather conditions and subzero temperatures. Such conditions may cause ice formation on part of the probe resulting in incorrect measurement of air data parameters. Accordingly, resistive heating elements are installed in the air data probes to prevent ice formation. To heat the probe, an operational voltage is provided through the heating element. Prolonged usage and frequent switching (i.e., between the OFF state and ON state) can lead to an abrupt failure of the heating element. When the heating element breaks down, the probe must be replaced prior to subsequent takeoff of the aircraft to ensure continued monitoring air data parameters. Thus, health monitoring of air data probes is critical.

Existing aircraft-based health monitoring systems can monitor various probe parameters but lack the sophistication to analyze the data using complex health monitoring algorithms. Data must be transmitted to a ground station for this purpose. Similarly, modification of the monitoring parameters in current systems requires the removal and reinstallation of the updated data acquisition module. A need exists for a dynamic health monitoring system for real-time prediction of remaining useful life and predicted failure of an air data probe with a high level of accuracy.

XP055604680 relates to the development of an Aircraft Health Monitoring Program for Predictive Maintenance, and EP 3 739 411 A1 relates to a health monitoring system, and more specifically to a pitot heater health monitoring system.

### SUMMARY

A system as defined in claim 1 is provided.

A method for operating a cloud infrastructure in a system for monitoring a vehicle-borne probe as defined in claim 1 is provided and includes receiving, by a first edge device in communication with the probe, sensed data related to a characteristic of a heating element of the probe, analyzing, by a first application of the first edge device, the sensed data to generate a first data output, receiving, by a coordinator, the first data output, and incorporating the first data output into a data package, receiving, by a cloud infrastructure, a data package, analyzing, by the cloud infrastructure, the data package to estimate a remaining useful life and a failure of the probe.

### BRIEF DESCRIPTION OF THE DRAWINGS

FIG. 1 is a diagram of a prognostics health monitoring system.
FIG. 2 is a diagram of an edge device of the prognostics health monitoring system.
FIG. 3 is a diagram of select software of the edge device.
FIG. 4A is a plot showing the operation of a stage-1 data processing application and a pre-loaded stage-2 data processing application.
FIG. 4B is a plot showing the operation of a stage-1 data processing application and a dynamically loaded stage-2 data processing application.
FIG. 4C is a plot showing the operation of a stage-1 data processing application and an alternative dynamically loaded stage-2 data processing application.
FIG. 5 is a diagram of a smart coordinator of the prognostics health monitoring system.
FIG. 6 is a plot showing the operation of a stage-3 data analytics application implemented by the smart coordinator.
FIG. 7 is a flow chart illustrating a method of determining a remaining useful life and predicting imminent failure of a probe, as implemented by a cloud infrastructure of the prognostics health monitoring system.

While the above-identified figures set forth one or more embodiments of the present disclosure, other embodiments are also contemplated, as noted in the discussion. The figures may not be drawn to scale, and applications and embodiments of the present invention may include features and components not specifically shown in the drawings.

### DETAILED DESCRIPTION

This disclosure presents a prognostics health monitoring (PHM) system and method for estimating a remaining useful life (RUL) and predicting imminent failure of a vehicle-bome probe, such as an aircraft air data probe. The system includes one or more sensors in communication with each monitored probe. An edge device associated with a probe receives the sensed data and performs various levels of data analytics. Data outputs from each edge device are sent to a smart coordinator of the system for additional monitoring and analysis. The coordinator packages the data and sends it to a cloud infrastructure and ground station for detailed analysis.

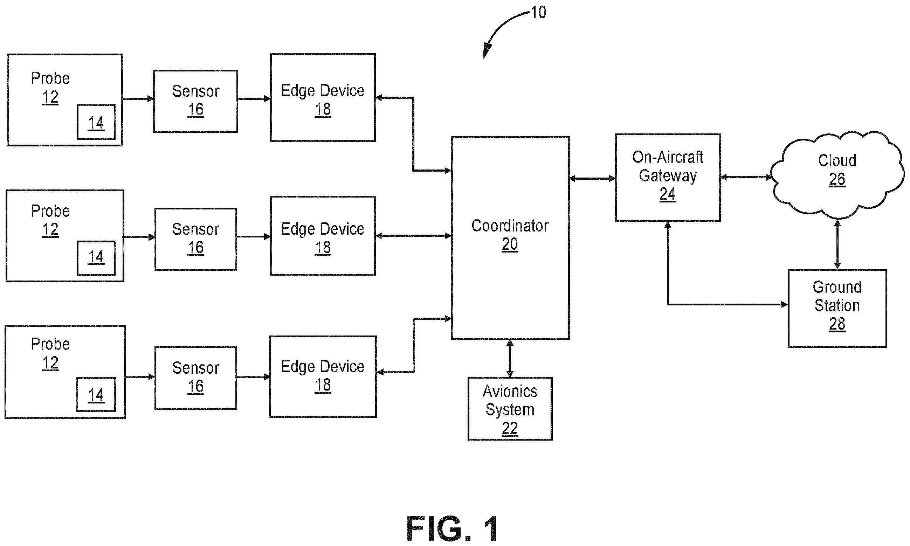

FIG. 1 is a schematic block diagram of an exemplary embodiment of multi-stage PHM system 10 for monitoring one or more air data probes 12. System 10 includes a sensor 16 in communication with each probe 12 for monitoring characteristics of a heating element 14 of each probe 12. In some embodiments, more than one sensor 16 can be in communication with a respective probe 12. Each sensor 16 is further in communication with a dynamic edge device 18 for performing initial processing and monitoring of sensed data. Each edge device 18 is in communication with smart coordinator 20 which monitors pre-processed data from each edge device 18, as well as aircraft parameters from one or more avionics systems 22. On-aircraft gateway 24 connects coordinator 20 with cloud 26 and ground station 28. The individual components of system 10 are discussed in greater detail below.

Each probe 12 can be a pitot probe, total air temperature (TAT) probe, or angle-of-attack (AOA) probe, to name a few non-limiting examples, configured to measure aircraft operational parameters such as pressure and/or temperature. In an alternative embodiment, probes 12 can be mounted to other types of (non-aerial) vehicles and can be suitable for measuring operational parameters of such vehicles. Each probe 12 includes a resistive heating element 14, such as a heater wire, powered by a source of alternating (AC) or direct (DC) current. The flow of current through heating element 14 provides heating to the associated probe 12 to prevent ice accretion. The one or more sensors 16 in communication with a respective probe 12 can measure characteristics of an associated heating element 14, such as current, capacitance, and/or voltage.

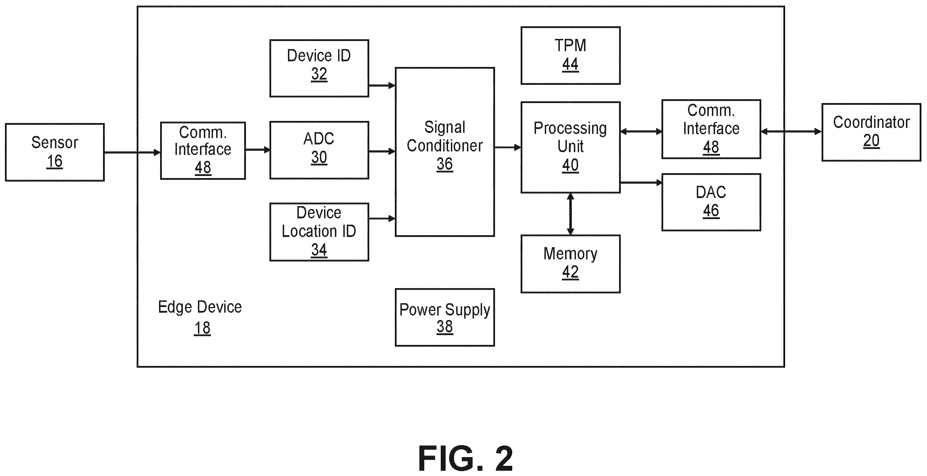

Each sensor 16 outputs sensed heating element 14 data to an associated edge device 18. FIG. 2 is a schematic block diagram of an exemplary edge device 18 as a modular end node. Shown in FIG. 2 as part of edge device 18 are analog-to-digital converter (ADC) 30, device identification (ID) 32, device location identification (ID) 34, signal conditioner 36, power supply 38, processing unit 40, memory 42, trusted platform module (TPM) 44, digital-to-analog converter (DAC) 46, and input/output communication interfaces 48.

In operation of system 10, data from sensor 16 is received by edge device 18 via a wired (e.g., Ethernet, AFDX, ARINC 429, RS232/422/485, CAN, etc.) or wireless (e.g., Bluetooth, Wi-Fi, cellular, etc.) first/input communication interface 48. The latter type of connection permits a sensor 16 and associated edge device 18 to be in physically separate locations on the aircraft. ADC 30 converts the received sensor 16 output signals to digital signals. Subsequent signal conditioning (e.g., filtering, linearization, amplification, etc.) is performed by signal conditioner 36. Power supply 38 can be any suitable source of power, such as a battery, energy harvesting devices, or other sources on the aircraft. Upon power-up of edge device 18, processing unit 40 reads device ID 32 and device location ID 34 to determine/confirm the type and physical location of edge device 18. Processing unit 40 then reads the device configuration stored in memory 42 and configures edge device 18 based on device ID 32 and location ID 34. Memory 42 can further store data and applications for access by processing unit 40. Processing unit 40 can be, for example, a microprocessor or microcontroller configured to perform various data processing and analysis tasks, discussed in greater detail below, and output processed data to coordinator 20 via second/output communication interface 48. Output communication interface 48 may be of the wired or wireless type discussed above with respect to input communication interface 48. Output communication interface 48 is configured to exchange data with coordinator 20. TPM 44 is at least one of various cybersecurity measures (e.g., certificate management, advanced encryption, etc.) implemented by edge device 18 for securely communicating with interfacing devices and systems.

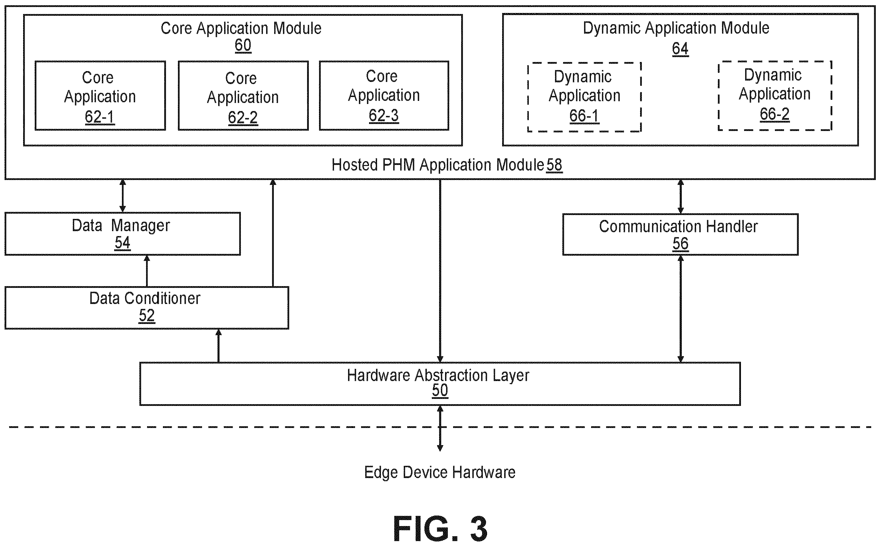

FIG. 3 is a schematic block diagram of select software of edge device 18. Edge device 18 software can include hardware abstraction layer 50, data conditioner 52, PHM data manager 54, communication handler 56, and hosted PHM application module 58. Hardware abstraction layer 50 includes various board support packages and device drivers for abstracting hardware interfaces (e.g., device ID, discrete input/output, analog input/output, communication interfaces, etc.) of edge device 18. Hardware abstraction layer can abstract higher level software modules from any changes in such hardware. Data conditioner 52 acquires signals from the hardware at the configured rate, filters the data, and stores the data in memory 42 (shown in FIG. 2) which is accessible by data manager 54. Data manager 54 manages edge device 18 data according to its configuration. Data manager 54 implements a publish/subscribe methodology to enable one or more applications of hosted PHM application module 58 to publish processed data while others of the applications can subscribe for data for processing. Any published data are automatically broadcast to any applications which have subscribed for that data. Data manager 54 further allows for space and time partitioning of the various hosted PHM applications which enables multiple Development Assurance Level (DAL) software/applications to coexist in edge device 18. Communication handler 56 implements wrapper software to the various wired and/or wireless communication interfaces implemented in edge device 18. Communication handler 56 provides standard software interfaces (e.g., SDK or APIs) to interfacing hosted PHM applications to enable communication with the external systems. Communication handler 56 uses cybersecurity measures (e.g., TPM, EAP-TLS, certificate management, advanced encryption, etc.) implemented in the operating system (OS) to ensure security of edge device 18 and its communications with interfacing devices/systems, including coordinator 20, and other avionics systems.

Hosted PHM application module 58 can include core application module 60 with core applications 62-1, 62-2, and 62-3 (collectively referred to as "core applications 62"), and dynamic application module 64 with dynamic applications 66-1 and 66-2 (collectively referred to as "dynamic applications 66"). Various embodiments of edge device 18 can include any number of 1 to *n* core applications 62 and/or 0 to *m* dynamic applications 66. In some embodiments, core applications 62 and/or dynamic applications 66 can be incorporated into a field load bundle that enables updating of the hosted applications. The field load bundle can additionally and/or alternatively include any of the following sections for updating: device configuration information (e.g., edge device ID and location ID, serial number, part number, etc.), cybersecurity (e.g., certificates, encryption keys, etc.), device-specific software containing configuration information (e.g., input sample size, sampling rate, output rate, parameters, communication protocol, etc.), and software/firmware (e.g., executable object code, parameter data item, etc.).

Core applications 62 enable implementation of the PHM functions of edge device 18. More specifically, core application 62-1 can be an advanced local PHM data repository for implementing reusable data analytics algorithms (e.g., Fast Fourier Transform (FFT), arc fault detection, etc.) local to edge device 18. The various hosted PHM applications can use the algorithms implemented in the data analytics repository instead of duplicating their implementation. Core application 62-2 can be a stage-1 pre-PHM data processing application for continuously monitoring sensed heater 14 data, and for performing coarse-PHM data analytics on the sensed data using one or more coarse-PHM data analytics algorithms. Any resulting coarse data analytics outputs can be sent to coordinator 20, as well as further monitored by one of the dynamic applications 66, as is discussed in greater detail below. Core application 62-3 can be a field loader application for updating any of the bundled applications or sections discussed above.

Dynamic applications 66 are optional PHM applications that can be temporary or short-term in nature. More specifically, dynamic applications 66 can be automatically loaded onto edge device 18 by coordinator 20 and/or enabled/activated by the occurrence of one or more trigger events. As such, dynamic applications 66 can be automatically deactivated after a specific interval or when other conditions occur. Dynamic application 66-1 can include one or more application-specific monitoring algorithms (e.g., for brake temperature monitoring, acoustics monitoring, smart BIT, battery monitoring, vibration monitoring, cabin temperature monitoring, heater current arc fault detection, etc.). Dynamic application 66-2 can be a stage-2 targeted PHM assessment application for monitoring the coarse data outputs from the stage-1 pre-PHM application, performing finer data analysis on the monitored data, and dynamically updating the data monitoring scheme of the hosting edge device 18. The finer data analysis can include monitoring of additional parameters from the associated sensor 16, monitoring of parameters at a higher rate, and/or monitoring of higher parameters at higher precision and/or processing.

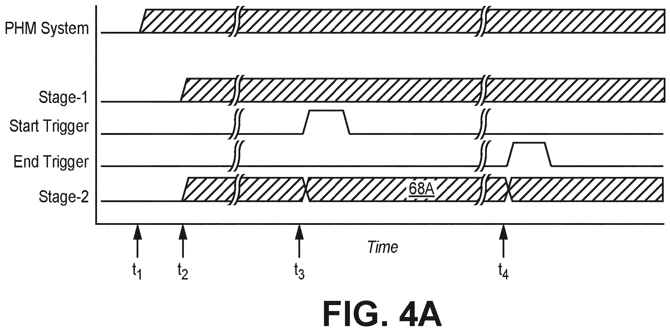

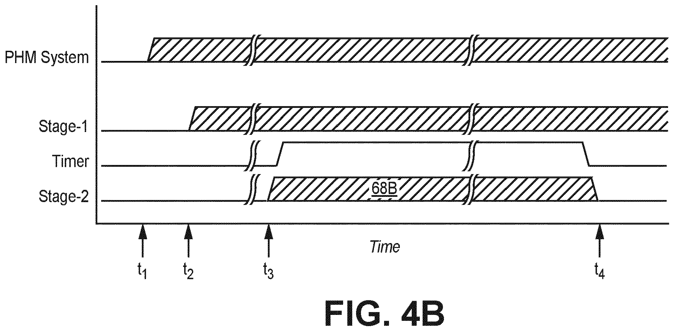

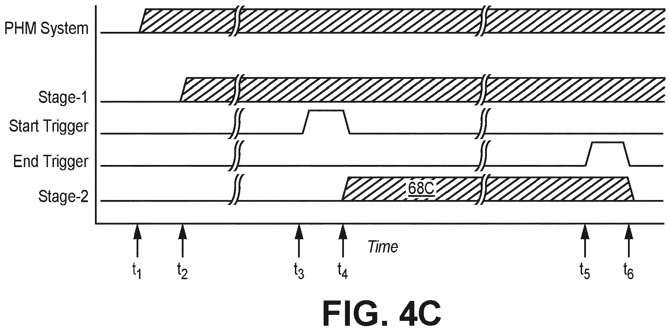

FIG. 4A is a plot, over time, of the operation of the stage-1 pre-PHM data processing application and a pre-loaded stage-2 targeted PHM assessment application. FIG. 4B is a plot, over time, of the operation of the stage-1 pre-PHM data processing application and an alternative, dynamically loaded, time-bound stage-2 targeted PHM assessment application. FIG. 4C is a plot, over time, of the operation of the stage-1 pre-PHM data processing application and a second alternative dynamically loaded, trigger-based stage-2 targeted PHM assessment application.

As shown in FIG. 4A from the top to the bottom of the y-axis, are plots of PHM system 10, the stage-1 pre-PHM data processing application, start and end triggers, and the stage-2 targeted PHM assessment application. Beginning at time t₁, system 10 is running and active. At time t₂, the stage-1 pre-PHM data processing application is activated. In the embodiment of FIG. 4A, the stage-2 targeted PHM assessment application is pre-loaded onto edge device 18 and continuously monitors the data outputs generated by the stage-1 application for trigger events. As such, the stage-2 targeted PHM assessment application begins operating at time t₂. A "start" trigger event occurs at time t₃. For any of the embodiments of FIGS. 4A-4C, a "start" trigger event can be, for example, a probe fault, or exceedance of a predetermined parameter threshold or count. Also at time t₃, the stage-2 targeted PHM assessment application begins finer data analytics, as identified by interval 68A. An "end" trigger event occurs at time t₄, and the stage-2 targeted PHM assessment application ceases finer data analytics and continues monitoring stage-1 data. An "end" trigger event can be, for example, the ending of or return to normal values of a "start" trigger event, or a different trigger event based on another monitored parameter. Interval 68A is defined by the "start" and "end" trigger events of times t₃ and t₄, respectively, and represents activation of the stage-2 targeted PHM assessment application to perform finer data analysis and generate a finer data analytics output to be sent to coordinator 20.

The embodiment of FIG. 4B is similar to the embodiment of FIG. 4A, except that the stage-2 targeted PHM assessment application is dynamically loaded and activated by coordinator 20. The stage-2 targeted PHM assessment application is time-bound such that it is configured to run for a predetermined interval (interval 68B) once activated. Activation can occur by a "start" trigger event, and deactivation with time elapsing. As with the embodiment of FIG. 4A, PHM system 10 and the stage-1 pre-PHM data processing application become active at times t₁ and t₂, respectively. At time t₃, the timer begins running as the result of a "start" trigger or other event, and the stage-2 targeted PHM assessment application is activated to perform finer data analysis. Time elapses at time t₄ and the stage-2 targeted PHM assessment application is deactivated. The finer data analytics output generated by the stage-2 targeted PHM assessment application can be sent to coordinator 20. In an alternative embodiment, activation/deactivation of the stage-2 targeted PHM assessment application may not occur simultaneously with the starting/ending of the timer, rather, interval 68B can be slightly offset from the timer due to a cycle delay in processing the event triggering the timer.

FIG. 4C shows an alternative dynamically loaded stage-2 targeted PHM assessment application configured for trigger-based activation. As with the embodiments of FIGS. 4A and 4B, PHM system 10 and the stage-1 pre-PHM data processing application become active at times t₁ and t₂, respectively. At time t₃, a "start" trigger event occurs, causing activation of the stage-2 targeted PHM assessment application to perform finer data analytics at time t₄. An "end" trigger event occurs at time t₅ leading to deactivation of the stage-2 targeted PHM assessment application at time t₆. Interval 68C defines the period of activity of the stage-2 targeted PHM assessment application. As with the embodiments of FIGS. 4A and 4B, the finer data analytics output generated by the stage-2 targeted PHM assessment application can be sent to coordinator 20.

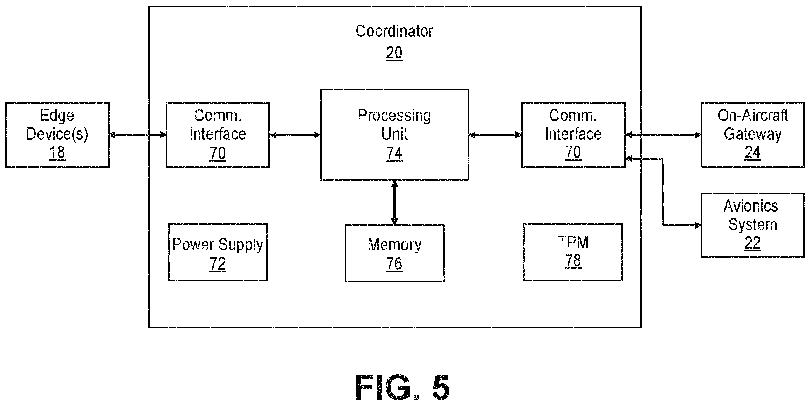

FIG. 5 is a schematic block diagram of an exemplary smart coordinator 20. As shown in FIG. 5, coordinator 20 includes communication interfaces 70 interfacing with one or more edge devices 18, on-aircraft gateway 24, and one or more avionics systems 22. Through its interface with avionics systems 22, coordinator 20 can monitor aircraft parameters such as air speed, weight-on-wheel, latitude, longitude, altitude, etc. Further included are power supply 72, processing unit 74 (e.g., a microprocessor or microcontroller), memory 76, and TPM 78. Communication interfaces 70 can be wired (e.g., Ethernet, AFDX, ARINC 429, RS232/422/485, CAN, etc.) or wireless (e.g., Bluetooth, Wi-Fi, cellular, etc.) interfaces for exchanging data with connected devices and systems. Power supply 72 can be a battery, or energy harvesting devices or other sources on the aircraft. According to the invention, upon power-up, processing unit 74 retrieves edge device 18 and/or coordinator 20 updates (e.g., software, configuration information, field load bundles, etc.) from ground station 28 or cloud 26 via on-aircraft gateway 24. Each edge device 18 interfaced with coordinator 20 attempts to connect with coordinator 20 until coordinator 20 rejects or accepts the request by authenticating the requesting edge devices 18. Connected edge devices 18 are dynamically configured by coordinator 20, which transmits the latest software, configuration, trigger events, etc. to edge devices 18. Processing unit 74 accesses various data and applications from memory 76.

As discussed above with respect to FIGS. 4B and 4C, coordinator 20 can monitor the stage-1 pre-PHM coarse data outputs from an associated edge device 18, and dynamically load a stage-2 targeted assessment application to the edge device 18 if any trigger events occur. The application can be loaded using, for example, a field load bundle. Upon successful loading, coordinator 20 can activate and deactivate the stage-2 targeted assessment application as necessary based on activation parameters (e.g., trigger events, predetermined time intervals, etc.). In some embodiments, coordinator 20 can be configured to locally (i.e., within coordinator 20) implement the stage-2 targeted assessment application using processing unit 74.

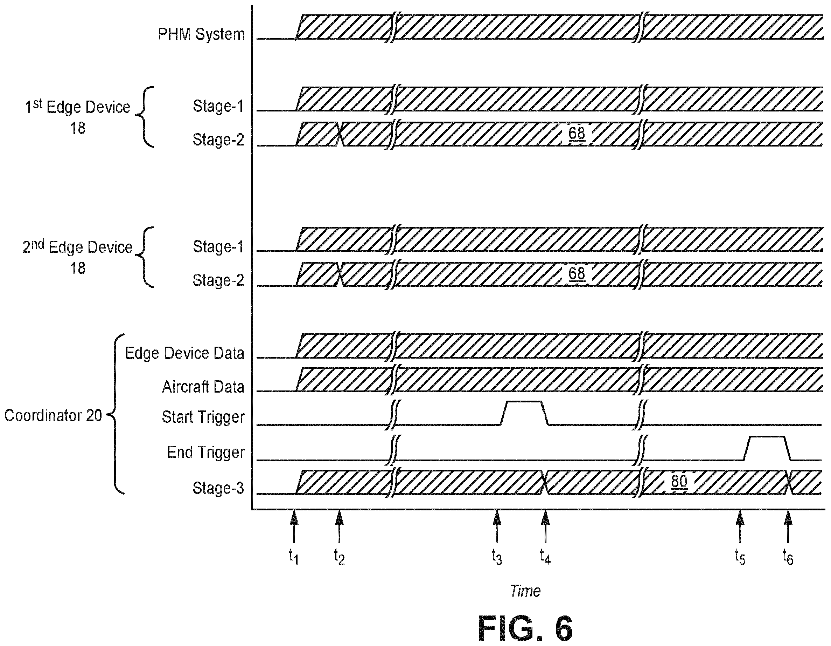

Coordinator 20 can further synthesize monitored aircraft data from avionics system(s) 22 with the coarse data (stage-1) and finer data (stage-2) analytics outputs from multiple edge devices 18 for determining trigger events and making monitoring decisions. Accordingly, coordinator 20 can implement stage-3 PHM data analytics on the synthesized data. FIG. 6 is a plot, over time, of the operation of the stage-3 data analytics application on the data monitored by coordinator 20. Shown in FIG. 6, from the top to the bottom of the y-axis, are plots of the operation of PHM system 10, the stage-1 pre-PHM data processing applications and stage-2 targeted PHM assessment applications of a first and second edge devices 18, monitored data from edge devices 18, monitored aircraft data, start and end triggers, and the stage-3 PHM data analytics application. Although only two edge devices 18 are represented on the plot of FIG. 6, coordinator 20 can monitor and analyze data from more than two edge devices 18 in alternative embodiments.

At time t₁, system 10 and the stage-1 and stage-2 applications from each edge device 18 are activated, and coordinator 20 begins monitoring edge device and aircraft data. At time t₂, the stage-2 applications from each edge device 18 are activated for an interval defined generically as interval 68. The "start" trigger event for activation of the stage-2 applications is not plotted in FIG. 6. At time t₃, a "start" trigger event, based on the monitored edge device and aircraft data, occurs and coordinator 20 begins stage-3 PHM data analytics at time t₄. At time t₅, an "end" trigger event occurs, and coordinator 20 ceases stage-3 PHM data analytics at time t₆. Interval 80 is defined by the "start" and "end" trigger events and represents activation of stage-3 PHM data analytics and generation of a stage-3 data analytics output by coordinator 20. In an alterative embodiment, stage-3 PHM data analytics can be time-bound (i.e., enabled for predetermined intervals) in a manner substantially similar to the stage-2 targeted PHM assessment application of FIG. 4B.

Data received and/or analyzed by coordinator 20 (e.g., aircraft data, stage-1, stage-2 and/or stage-3 data analytics outputs) can be timestamped and packaged before sending to cloud 26 and/or ground station 28. Cybersecurity measures, such as encryption and digital signatures, can be implemented by TPM 78 to ensure confidentiality, integrity, and authentication of the data package(s). In an alternative embodiment, system 10 can include more than one coordinator 20, and data packages can be shared among the multiple coordinators 20. Data packages are shared with cloud 26 and/or ground station 28 via on-aircraft gateway 24. Referring back to FIG. 1, on-aircraft gateway 24 is distinct from coordinator 20, however, coordinator 20 and on-aircraft gateway 24 can be grouped together in an alternative embodiment to facilitate implementation of the two components.

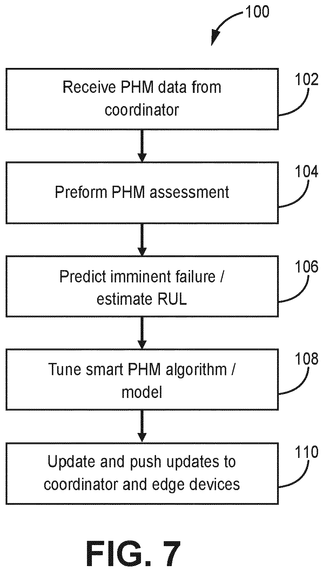

Cloud 26 can implement a cloud-hosted PHM data analytics application for analyzing, using machine learning techniques, received PHM data to predict imminent failure and estimate RUL of air data probes 12. FIG. 7 is a flowchart illustrating method 100 showing the prediction, estimation, and updating functions of cloud 26. At step 102, the data package is received by cloud 26 from coordinator 20. At step 104, cloud 26 performs a PHM assessment on the data. At step 106, the assessment can be used to predict imminent failure and estimate RUL of probe 12. This can be accomplished, for example, by using machine learning techniques to analyze received data, as well as monitored aircraft data, data history, and trend data. Supplemental flight data such as weather, flight path, service history, etc. can also be included and analyzed. At step 108, cloud 26 can automatically and intelligently tune/refine algorithms of the stage-1, stage-2 and/or stage-3 applications to improve the relevance and quality of collected data for more accurate RUL estimation and failure prediction. At step 110, the cloud-hosted PHM data analytics application can update trigger events and data collection and monitoring strategies, as necessary. Updates can be included in field load bundles and pushed/transmitted, by cloud 26, to coordinator 20 and edge devices 18.

Cloud 26 can further implement data storage for storing monitored data. Ground station 28 can access data stored in cloud 26 to perform additional analysis using, for example, advanced PHM algorithms, to further improve upon technologies and methods for estimating RUL and predicting imminent failures of probes 12. In some embodiments, ground station 28 can be configured to carry out the failure prediction and RUL estimation of method 100 in addition to, or as an alternative to cloud 26. This can be the case, for example, where it is desirable to provide redundancy, or where the functions of cloud 26 and ground station 28 overlap. RUL and failure predictions can be reported to a database monitored by and accessible to aircraft maintenance personnel. Such reporting can be accomplished via an alert or notification generated by an application of cloud 26, and/or by ground station 28. PHM system 10 allows for a tailored maintenance approach that allows for the timely replacement of faulty probes to minimize operational disruption and avoids the unnecessary replacement of healthy probes based on flight hours or other standard metrics.

**Discussion of Possible Embodiments** not belonging to the claimed invention.

The following are non-exclusive descriptions of possible embodiments not belonging to the claimed invention.

A system for monitoring a vehicle-borne probe includes a first edge device in communication with the probe and configured to sense data related to a characteristic of a heating element of the probe, a coordinator in communication with the first edge device and configured to receive a first data output from the first edge device and to incorporate the first data output into a data package, a cloud infrastructure in communication with the coordinator via a data gateway and configured to analyze the data package to estimate a remaining useful life and predict a failure of the probe, and a ground station in communication with the cloud infrastructure and configured to refine remaining useful life estimation and failure prediction techniques of the system.

The system of the preceding paragraph can optionally include, additionally and/or alternatively, any one or more of the following features, configurations and/or additional components:
In the above system, the vehicle can be an aircraft and the probe can be one of a pitot probe, a total air temperature probe, and an angle-of-attack probe.

In any of the above systems, the coordinator can further be configured to either receive a second data output from the first edge device, or to generate the second data output.

In any of the above systems, the coordinator can further be configured to incorporate the second data output into the data package.

Any of the above systems can further include: a second edge device in communication with a separate probe of the aircraft. The coordinator can further be configured to receive a third data output from the second edge device and incorporate the third data output into the data package.

In any of the above systems, the cloud infrastructure can further be configured to analyze at least one of trend data and supplemental flight data to estimate the remaining useful life and predict the failure of the probe.

In any of the above systems, the supplemental flight data can include at least one of weather, flight path, and service history of the aircraft.

In any of the above systems, the cloud infrastructure can further be configured to implement a data analytics application to analyze the data package.

In any of the above systems, the data analytics application can include machine learning.

In any of the above systems, at least one of the cloud infrastructure and the ground station can be configured to generate a notification of the remaining useful life estimation and the failure of the probe.

A method for operating a cloud infrastructure in a system for monitoring a vehicle-borne probe includes receiving, by a first edge device in communication with the probe, sensed data related to a characteristic of a heating element of the probe, analyzing, by a first application of the first edge device, the sensed data to generate a first data output, receiving, by a coordinator in communication with the first edge device, the first data output, and incorporating the first data output into a data package, receiving, by a cloud infrastructure in communication with a coordinator, a data package, analyzing, by the cloud infrastructure, the data package to estimate a remaining useful life and a failure of the probe, and transmitting, by the cloud infrastructure, updates to the coordinator.

The method of the preceding paragraph can optionally include, additionally and/or alternatively, any one or more of the following features, configurations and/or additional components:
The above method can further include analyzing, by a second application of the first edge device, the first data output to generate a second data output, receiving, by the coordinator, the second data output, and incorporating, by the coordinator, the second data output in the data package.

In any of the above methods, the first application can be a core application, and the second application can be a dynamic application.

Any of the above methods can further include: monitoring, by the core application, the sensed data, and analyzing, by the core application, the sensed data to generate the first data output.

Any of the above methods can further include: monitoring, by the dynamic application, the first data output, analyzing, by the dynamic application, the first data output if a trigger event occurs, and generating, by the dynamic application, the second data output.

In any of the above methods, the step of analyzing the data package can include implementing, by the cloud infrastructure, a data analytics application.

Any of the above methods can further include: refining, by the coordinator, at least one of the core application and the dynamic application.

In any of the above methods, the updates transmitted to the coordinator can include an updated trigger event.

Any of the above methods can further include: transmitting, by the cloud infrastructure, data to a ground station.

Any of the above methods can further include: generating, by at least one of the cloud infrastructure and ground station, a notification of an estimation of the remaining useful life of the probe and a prediction of the failure of the probe.

While the invention has been described with reference to an exemplary embodiment(s), it will be understood by those skilled in the art that various changes may be made without departing from the scope of the invention as defined by the claims. Therefore, it is intended that the invention not be limited to the particular embodiment(s) disclosed, but that the invention will include all embodiments falling within the scope of the appended claims.

## Claims

1. A system comprising:
a probe (12) for mounting to a vehicle having a heating element (14); and
a system for monitoring the probe (12), the system comprising:
a first edge device (18) in communication with the probe and configured to sense data related to a characteristic of the heating element (14) of the probe;
a coordinator (20) in communication with the first edge device and configured to receive a first data output from the first edge device and to incorporate the first data output into a data package;
a cloud infrastructure in communication with the coordinator via a data gateway and configured to analyze the data package to estimate a remaining useful life and predict a failure of the probe; and
a ground station (28) in communication with the cloud infrastructure and configured to refine remaining useful life estimation and failure prediction techniques of the system;
wherein the coordinator is further configured to:
authenticate, upon power up of the coordinator, the first edge device (18); and
subsequently, retrieve updates from the cloud infrastructure (26) and transmit the updates to the first edge device (18).

2. The system of claim 1, wherein the system comprises a vehicle, said probe being mounted to said vehicle, and optionally wherein the vehicle is an aircraft and wherein the probe (12) is one of a pitot probe, a total air temperature probe, and an angle-of-attack probe.

3. The system of claim 1 or 2, wherein the coordinator (20) is further configured to either receive a second data output from the first edge device (18), or to generate the second data output; and optionally, wherein the coordinator is further configured to incorporate the second data output into the data package.

4. The system of claim 3 and further comprising: a second edge device (18) in communication with a separate probe (12), wherein the coordinator (20) is further configured to receive a third data output from the second edge device and incorporate the third data output into the data package.

5. The system of any preceding claim, wherein the cloud infrastructure is further configured to analyze at least one of trend data and supplemental flight data to estimate the remaining useful life and predict the failure of the probe (12); and optionally, wherein the supplemental flight data comprises at least one of weather, flight path, and service history of the aircraft.

6. The system of any preceding claim, wherein the cloud infrastructure is further configured to implement a data analytics application to analyze the data package; and optionally, wherein the data analytics application includes machine learning.

7. The system of any preceding claim, wherein at least one of the cloud infrastructure and the ground station (28) is configured to generate a notification of the remaining useful life estimation and the failure of the probe (12).

8. A method for operating a cloud infrastructure in a system for monitoring a vehicle-borne probe, the method comprising:
receiving, by a first edge device in communication with the probe, sensed data related to a characteristic of a heating element of the probe;
analyzing, by a first application of the first edge device, the sensed data to generate a first data output;
authenticating, by a coordinator in communication with the first edge device, a connection request from the first edge device;
subsequently, retrieving updates from a cloud infrastructure (26) in communication with the coordinator and transmitting the updates to the first edge device;
receiving, by the coordinator, the first data output, and incorporating the first data output into a data package;
receiving, by the cloud infrastructure, a data package; and
analyzing, by the cloud infrastructure, the data package to estimate a remaining useful life and a failure of the probe.

9. The method of claim 8, and further comprising:
analyzing, by a second application of the first edge device, the first data output to generate a second data output;
receiving, by the coordinator, the second data output; and
incorporating, by the coordinator, the second data output in the data package.

10. The method of claim 9, wherein the first application is a core application, and wherein the second application is a dynamic application; and optionally, the method further comprising:
monitoring, by the core application, the sensed data; and
analyzing, by the core application, the sensed data to generate the first data output.

11. The method of claim 10 and further comprising:
monitoring, by the dynamic application, the first data output; and
analyzing, by the dynamic application, the first data output if a trigger event occurs; and
generating, by the dynamic application, the second data output.

12. The method of claim any of claims 8 to 11, wherein the step of analyzing the data package comprises: implementing, by the cloud infrastructure, a data analytics application; and/or the method further comprising: refining, by the coordinator, at least one of the core application and the dynamic application.

13. The method of any of claims 8 to 12, wherein the updates transmitted to the coordinator include an updated trigger event.

14. The method of any of claims 8 to 13, further comprising: transmitting, by the cloud infrastructure, data to a ground station.

15. The method of claim any of claims 8 to 14 and further comprising: generating, by at least one of the cloud infrastructure and ground station, a notification of an estimation of the remaining useful life of the probe and a prediction of the failure of the probe.

## Patentansprüche

1. System, umfassend:
eine Sonde (12) zum Montieren eines Heizelements (14) an einem Fahrzeug; und
ein System zum Überwachen der Sonde (12), wobei das System Folgendes umfasst:
eine erste Randvorrichtung (18) in Kommunikation mit der Sonde und dazu konfiguriert, Daten zu erfassen, die sich auf eine Eigenschaft des Heizelements (14) der Sonde beziehen;
einen Koordinator (20) in Kommunikation mit der ersten Vorrichtung an der Kante und dazu konfiguriert ist, eine erste Datenausgabe von der ersten Randvorrichtung zu empfangen und die erste Datenausgabe in ein Datenpaket aufzunehmen;
eine Cloud-Infrastruktur in Kommunikation mit dem Koordinator über ein Daten-Gateway und dazu konfiguriert, das Datenpaket zu analysieren, um eine restliche Nutzungsdauer zu schätzen und einen Ausfall der Sonde vorherzusagen; und
eine Bodenstation (28) in Kommunikation mit der Cloud-Infrastruktur und dazu konfiguriert, die Schätzung der restlichen Nutzungsdauer und die Ausfallvorhersagetechniken des Systems zu verfeinern;
wobei der Koordinator ferner zu Folgendem konfiguriert ist:
Authentifizieren der ersten Randvorrichtung (18) beim Einschalten des Koordinators; und
nachfolgend Abrufen von Aktualisierungen aus der Cloud-Infrastruktur (26) und Übertragen der Aktualisierungen an die erste Randvorrichtung (18).

2. System nach Anspruch 1, wobei das System ein Fahrzeug umfasst, wobei die Sonde an dem Fahrzeug montiert ist und wobei es sich bei dem Fahrzeug optional um ein Luftfahrzeug handelt und wobei es sich bei der Sonde (12) um eine Pitot-Sonde, eine Gesamtlufttemperatursonde oder eine Anstellwinkel-Sonde handelt.

3. System nach Anspruch 1 oder 2, wobei der Koordinator (20) ferner dazu konfiguriert ist, entweder eine zweite Datenausgabe von der ersten Vorrichtung (18) zu empfangen oder die zweite Datenausgabe zu erzeugen, und wobei der Koordinator optional dazu konfiguriert ist, die zweite Datenausgabe in das Datenpaket aufzunehmen.

4. System nach Anspruch 3 und ferner umfassend: eine zweite Randvorrichtung (18) in Kommunikation mit einer separaten Sonde (12), wobei der Koordinator (20) dazu konfiguriert ist, eine dritte Datenausgabe von der zweiten Randvorrichtung zu empfangen und die dritte Datenausgabe in das Datenpaket aufzunehmen.

5. System nach einem der vorhergehenden Ansprüche, wobei die Cloud-Infrastruktur ferner dazu konfiguriert ist, mindestens eines von Trenddaten und Ergänzungsflugdaten zu analysieren, um die restliche Nutzungsdauer zu schätzen und den Ausfall der Sonde (12) vorherzusagen; und wobei die Ergänzungsflugdaten optional mindestens eines von Wetter, Flugpfad und Wartungshistorie des Luftfahrzeugs umfassen.

6. System nach einem der vorhergehenden Ansprüche, wobei die Cloud-Infrastruktur ferner dazu konfiguriert ist, eine Anwendung zur Datenanalyse zu implementieren, um das Datenpaket zu analysieren; und wobei die Anwendung zur Datenanalyse optional maschinelles Lernen beinhaltet.

7. System nach einem der vorhergehenden Ansprüche, wobei mindestens eine der Cloud-Infrastrukturen und der Bodenstation (28) dazu konfiguriert ist, eine Benachrichtigung der Abschätzung der restlichen Nutzungsdauer und des Ausfalls der Sonde (12) zu erzeugen.

8. Verfahren zum Betreiben einer Cloud-Infrastruktur in einem System zum Überwachen einer fahrzeuggestützten Sonde, wobei das Verfahren Folgendes umfasst:
Empfangen von erfassten Daten, die sich auf eine Eigenschaft eines Heizelements der Sonde beziehen, durch eine erste Randvorrichtung in Kommunikation mit der Sonde;
Analysieren der erfassten Daten durch eine erste Anwendung der ersten Randvorrichtung, um eine erste Datenausgabe zu generieren;
Authentifizieren einer Verbindungsanfrage der ersten Randvorrichtung durch einen Koordinator in Kommunikation mit der ersten Randvorrichtung;
nachfolgend Abrufen von Aktualisierungen von einer Cloud-Infrastruktur (26) in Kommunikation mit dem Koordinator und Übertragen der Aktualisierungen an die erste Randvorrichtung;
Empfangen der ersten Datenausgabe durch den Koordinator und Aufnehmen der ersten Datenausgabe in ein Datenpaket;
Empfangen eines Datenpakets durch die Cloud-Infrastruktur; und
Analysieren des Datenpakets, um eine restliche Nutzungsdauer und einen Ausfall der Sonde durch die Cloud-Infrastruktur zu schätzen.

9. Verfahren nach Anspruch 8 und ferner umfassend:
Analysieren der ersten Datenausgabe, um eine zweite Datenausgabe zu erzeugen, durch eine zweite Anwendung der ersten Randvorrichtung;
Empfangen der zweiten Datenausgabe durch den Koordinator; und
Aufnehmen der zweiten Datenausgabe in das Datenpaket durch den Koordinator.

10. Verfahren nach Anspruch 9, wobei die erste Anwendung eine Kernanwendung ist und wobei die zweite Anwendung eine dynamische Anwendung ist, und das Verfahren optional ferner Folgendes umfasst:
Überwachen der erfassten Daten durch die Kernanwendung; und
Analysieren der erfassten Daten, um die erste Datenausgabe zu erzeugen, durch die Kernanwendung.

11. Verfahren nach Anspruch 10 und ferner umfassend:
Überwachen der ersten Datenausgabe durch die dynamische Anwendung; und
Analysieren der ersten Datenausgabe, wenn ein Auslöseereignis auftritt, durch die dynamische Anwendung; und
Erzeugen der zweiten Datenausgabe durch die dynamische Anwendung.

12. Verfahren nach einem der Ansprüche 8 bis 11, wobei der Schritt des Analysierens des Datenpakets Folgendes umfasst: Implementieren einer Datenanalyseanwendung durch die Cloud-Infrastruktur; und/oder das Verfahren ferner Folgendes umfasst: Verfeinern mindestens einer der Kernanwendung und der dynamischen Anwendung durch den Koordinator.

13. Verfahren nach einem der Ansprüche 8 bis 12, wobei die an den Koordinator übertragenen Aktualisierungen ein aktualisiertes Auslöseereignis beinhalten.

14. Verfahren nach einem der Ansprüche 8 bis 13, ferner umfassend: Übertragen von Daten durch die Cloud-Infrastruktur an eine Bodenstation.

15. Verfahren nach einem der Ansprüche 8 bis 14 und ferner umfassend: Erzeugen einer Benachrichtigung einer Abschätzung der restlichen Nutzungsdauer der Sonde und einer Vorhersage des Ausfalls der Sonde durch mindestens eine der Cloud-Infrastruktur und der Bodenstation.

## Revendications

1. Système comprenant :
une sonde (12) pour monter sur un véhicule un élément chauffant (14) ; et
un système de surveillance de la sonde (12), le système comprenant :
un premier dispositif de bord (18) en communication avec la sonde et configuré pour détecter des données liées à une caractéristique de l'élément chauffant (14) de la sonde ;
un coordinateur (20) en communication avec le premier dispositif périphérique et configuré pour recevoir une première sortie de données du premier dispositif périphérique et pour incorporer la première sortie de données dans un paquet de données ;
une infrastructure cloud en communication avec le coordinateur via une passerelle de données et configurée pour analyser le paquet de données afin d'estimer une durée de vie utile restante et de prédire une défaillance de la sonde ; et
une station au sol (28) en communication avec l'infrastructure cloud et configurée pour affiner les techniques d'estimation de la durée de vie utile restante et de prédiction des défaillances du système ;
dans lequel le coordinateur est également configuré pour :
authentifier, lors de la mise sous tension du coordinateur, le premier dispositif périphérique (18) ; et
ensuite, récupérer les mises à jour de l'infrastructure cloud (26) et transmettre les mises à jour au premier dispositif périphérique (18).

2. Système selon la revendication 1, dans lequel le système comprend un véhicule, ladite sonde étant montée sur ledit véhicule, et éventuellement dans lequel le véhicule est un aéronef et dans lequel la sonde (12) est l'une d'une sonde de Pitot, d'une sonde de température totale de l'air et d'une sonde d'angle d'attaque.

3. Système selon la revendication 1 ou 2, dans lequel le coordinateur (20) est également configuré pour recevoir une deuxième sortie de données du premier dispositif périphérique (18), ou pour générer la deuxième sortie de données, et éventuellement, dans lequel le coordinateur est également configuré pour incorporer la deuxième sortie de données dans le paquet de données.

4. Système selon la revendication 3 et comprenant également :
un second dispositif périphérique (18) en communication avec une sonde séparée (12), dans lequel le coordinateur (20) est également configuré pour recevoir une troisième sortie de données du second dispositif périphérique et incorporer la troisième sortie de données dans le paquet de données.

5. Système selon une quelconque revendication précédente, dans lequel l'infrastructure cloud est également configurée pour analyser au moins l'une des données de tendance et des données de vol supplémentaires pour estimer la durée de vie utile restante et prédire la défaillance de la sonde (12) ; et éventuellement, dans lequel les données de vol supplémentaires comprennent au moins l'une des données météorologiques, de la trajectoire de vol et de l'historique de service de l'aéronef.

6. Système selon une quelconque revendication précédente, dans lequel l'infrastructure cloud est également configurée pour mettre en œuvre une application d'analyse de données pour analyser le paquet de données ; et éventuellement, dans lequel l'application d'analyse de données comporte un apprentissage automatique.

7. Système selon une quelconque revendication précédente, dans lequel au moins l'une de l'infrastructure cloud et de la station au sol (28) est configurée pour générer une notification de l'estimation de la durée de vie utile restante et de la défaillance de la sonde (12).

8. Procédé de fonctionnement d'un dispositif périphérique dans un système de surveillance d'une sonde embarquée sur véhicule, le procédé comprenant :
la réception, par un premier dispositif périphérique en communication avec la sonde, de données détectées liées à une caractéristique d'un élément chauffant de la sonde ;
l'analyse, par une première application du premier dispositif périphérique, des données détectées pour générer une première sortie de données ;
l'authentification, par un coordinateur en communication avec le premier dispositif périphérique, d'une demande de connexion à partir du premier dispositif périphérique ;
ensuite, la récupération de mises à jour à partir d'une infrastructure cloud (26) en communication avec le coordinateur et la transmission des mises à jour au premier dispositif périphérique ;
la réception, par le coordinateur, de la première sortie de données, et l'incorporation de la première sortie de données dans un paquet de données ;
la réception, par l'infrastructure cloud, d'un paquet de données ; et
l'analyse, par l'infrastructure cloud, du paquet de données pour estimer une durée de vie utile restante et une défaillance de la sonde.

9. Procédé selon la revendication 8, et comprenant également :
l'analyse, par une seconde application du premier dispositif périphérique, de la première sortie de données pour générer une deuxième sortie de données ;
la réception, par le coordinateur, de la deuxième sortie de données ; et
l'incorporation, par le coordinateur, de la deuxième sortie de données dans le paquet de données.

10. Procédé selon la revendication 9, dans lequel la première application est une application principale et dans lequel la seconde application est une application dynamique ; et éventuellement, le procédé comprenant également :
la surveillance, par l'application principale, des données détectées ; et
l'analyse, par l'application principale, des données détectées pour générer la première sortie de données.

11. Procédé de la revendication 10, comprenant également :
la surveillance, par l'application dynamique, de la première sortie de données ; et
l'analyse, par l'application dynamique, de la première sortie de données si un événement déclencheur se produit ; et
la génération, par l'application dynamique, de la deuxième sortie de données.

12. Procédé selon l'une quelconque des revendications 8 à 11, dans lequel l'étape d'analyse du paquet de données comprend : la mise en œuvre, par l'infrastructure cloud, d'une application d'analyse de données ; et/ou le procédé comprenant également : l'affinage, par le coordinateur, d'au moins l'une de l'application principale et de l'application dynamique.

13. Procédé selon l'une quelconque des revendications 8 à 12, dans lequel les mises à jour transmises au coordinateur comportent un événement déclencheur mis à jour.

14. Procédé selon l'une quelconque des revendications 8 à 13, comprenant également : la transmission, par l'infrastructure cloud, de données à une station au sol.

15. Procédé selon l'une quelconque des revendications 8 à 14 et comprenant également : la génération, par au moins l'une de l'infrastructure cloud et de la station au sol, d'une notification d'une estimation de la durée de vie utile restante de la sonde et d'une prédiction de la défaillance de la sonde.
